Europäisches Patentamt

European Patent Office

Office européen des brevets

(19)

(11) Veröffentlichungsnummer: **0 096 327**
**A1**

(12) **EUROPÄISCHE PATENTANMELDUNG**

(21) Anmeldenummer: **83105324.4**

(22) Anmeldetag: **30.05.83**

(51) Int. Cl.³: **H 04 N 7/10**
**H 04 B 9/00**

---

(30) Priorität: **03.06.82 DE 3220817**

(43) Veröffentlichungstag der Anmeldung:
**21.12.83 Patentblatt 83/51**

(84) Benannte Vertragsstaaten:
**DE FR GB SE**

(71) Anmelder: **International Standard Electric Corporation**
**320 Park Avenue**
**New York New York 10022(US)**

(84) Benannte Vertragsstaaten:
**FR GB SE**

(71) Anmelder: **Standard Elektrik Lorenz Aktiengesellschaft**
**Hellmuth-Hirth-Strasse 42**
**D-7000 Stuttgart 40(DE)**

(84) Benannte Vertragsstaaten:
**DE**

(72) Erfinder: **Gündner, Hans Martin, Dr.**
**Liebigstrasse 4/1**
**D-7141 Benningen(DE)**

(72) Erfinder: **Kaiser, Norbert**
**Hermann-Hesse-Strasse 10**
**D-7015 Korntal-Münchingen(DE)**

(72) Erfinder: **Matt, Hans Jürgen Dr.**
**Oberer Schlossberg 9**
**D-7148 Remseck 1(DE)**

(72) Erfinder: **Ohnsorge, Horst, Dr.**
**Zellerstrasse 4**
**D-7141 Freiberg/N(DE)**

(72) Erfinder: **Stephan, Wolfgang**
**Wiesenäckerstrasse 33**
**D-7257 Heimerdingen(DE)**

(74) Vertreter: **Graf, Georg Hugo, Dipl.-Ing. et al,**
**c/o Standard Elektrik Lorenz AG Patent- und**
**Lizenzwesen Postfach 300 929 Kurze Strasse 8**
**D-7000 Stuttgart 30(DE)**

---

(54) **Verteilnetz.**

(57) Das sternförmige Verteilnetz weist eine Kopfstation 1 und mindestens eine Vorfeldeinrichtung 5 auf, an die die Teilnehmer 7 über einen Sternkoppler 11 angeschlossen sind. Zwischen der Kopfstation und der Vorfeldeinrichtung und zwischen der Vorfeldeinrichtung und den Teilnehmern ist jeweils ein einziger Lichtwellenleiter vorhanden.

Die übertragung zwischen Kopfstation (1) und Vorfeldeinrichtung (5) und/oder Vorfeldeinrichtung (5) und Teilnehmereinrichtung (7) kann im Wellenlängenmultiplex erfolgen.

EP 0 096 327 A1

Fig. 1

H.M.Gündner 2-2-2-1-1

## Verteilnetz

Die Erfindung bezieht sich auf ein Verteilnetz für Fernsehsignale mit einer Kopfstation und mindestens einer Vorfeldeinrichtung, an die Teilnehmer einzeln direkt angeschlossen sind und bei dem die Übertragung über Lichtwellenleiter erfolgt.

Aus der Veröffentlichung von P. Haldemann, P. Guenzburger, E. Hafner und W.A. Steffen: "Design of an Optical Fibre CATV Network", 6. ECOC, York 1980, Conf. Proc. S.410-413 ist ein Verteilnetzwerk bekannt, bei dem im sekundären Netzwerk Vorfeldeinrichtungen über Verstärker an eine speisende Hauptleitung angeschlossen sind, wodurch sich in diesem Teil ein sternförmiger Aufbau ergibt. An jede Vorfeldeinrichtung sind in nicht beschriebener Weise drei Teilnehmer angeschlossen. Zur Übertragung der Signale werden auf allen Strecken zwei oder drei Lichtwellenleiter eingesetzt, je nach dem ob acht Fernsehsignale oder zehn Fernsehsignale und Rundfunksignale übertragen werden sollen. Die Übertragung der Signale erfolgt in analoger Form und im 28-56 MHz Band, was in den Vorfeldeinrichtungen oder beim Teilnehmer eine Umsetzung in die Originallage erfordert.

ZT/P1-Wr/R
02.06.1982

H.M.Gündner 2-2-2-1-1

Der Erfindung liegt die Aufgabe zugrunde, ein weniger aufwendiges Verteilnetz und Einzelheiten über den Anschluß der
Teilnehmer an die Vorfeldeinrichtung anzugeben. Die Lösung
dieser Aufgabe erfolgt mit den im Anspruch 1 angegebenen
Mitteln. Ausgestaltungen können den Unteransprüchen entnommen werden.

Die Erfindung wird nun anhand von Zeichnungen eines Ausführungsbeispiels näher erläutert. Es zeigt:

Fig. 1      in schematischer Darstellung den Aufbau des Verteilnetzes und

Fig. 2      einen Sternkoppler.

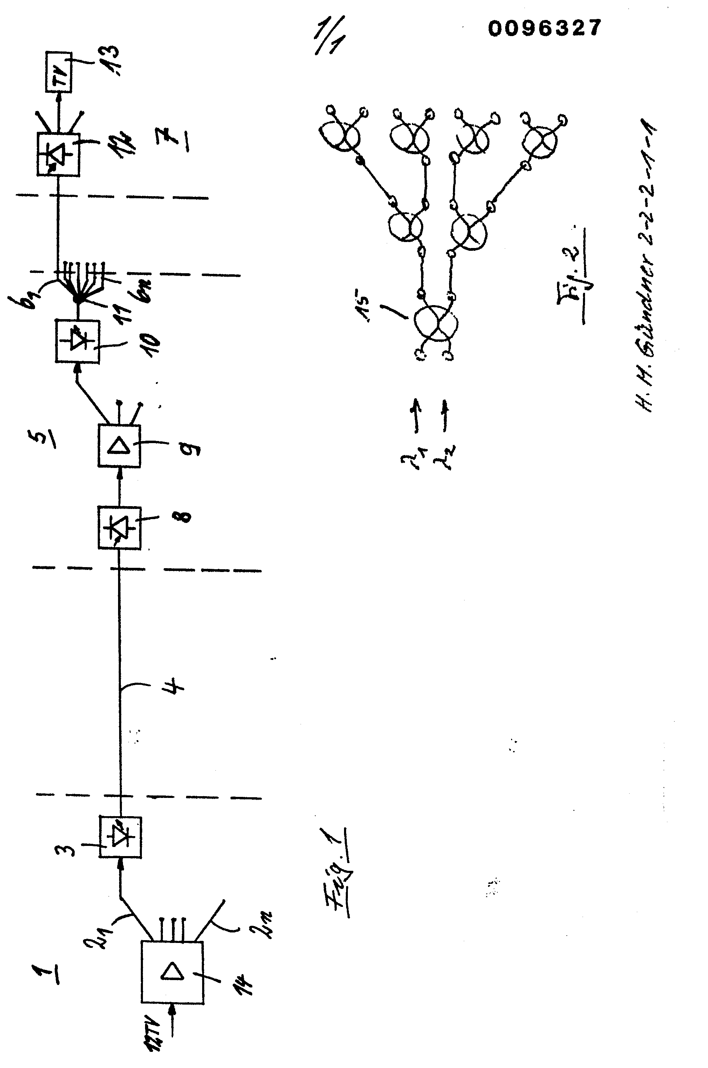

Das Verteilnetz weist gemäß Fig. 1 eine Kopfstation 1 auf,
die die ihr übergebenen Signale, beispielsweise zwölf Fernsehsignale im VHF- bzw. UHF-Bereich auf das sternförmige
Netz verteilt. Hierzu ist ein Verstärker 14 vorgesehen, der
über kurze Leitungsstücke $2_1$ bis $2_n$ die Fernsehsignale im
Frequenzmultiplex gleichzeitig analog an elektro/optische
Wandler 3 gibt, von denen nur einer dargestellt ist. An jeden
Wandler 3 ist ein einziger Lichtwellenleiter 4 angeschlossen,
an dessen Ende eine Vorfeldeinrichtung 5 vorhanden ist. Die
Vorfeldeinrichtungen 5 sind nahe den Teilnehmern 7 angeordnet und sie weisen jeweils einen optisch/elektrischen Wandler und optische Mittel zur Verteilung der Fernsehsignale
an mehrere Lichtwellenleiter $6_1$ bis $6_n$ auf, an deren Enden
jeweils ein Teilnehmer 7 angeschlossen ist.

Die elektro/optischen   Wandler 3 in der Kopfstation 1 sind
Laserdioden, die wegen ihrer optischen Ausgangsleistung,
Bandbreite und Linearität hierfür geeignet sind.

*3*

H.M.Gündner 2-2-2-1-1

Als Lichtwellenleiter in diesem Verteilnetz kann sowohl eine Multimode-Gradientenfaser als auch eine Monomodefaser verwendet werden. Für die Verbindung zwischen den Vorfeldeinrichtungen und den Teilnehmern sind vorzugsweise Multimode-Gradientenfasern vorgesehen, da diese bei einer späteren Einführung eines breitbandigen integrierten Glasfaser-Fernmeldeortsnetzes weiter verwendet werden können. Die Enfernung zwischen der Kopfstation 1 und den Vorfeldeinrichtungen 5 kann beispielsweise 5 km und die Entfernung zwischen den Vorfeldeinrichtungen und den Teilnehmern 7 kann bis zu einigen 100 m betragen.

In jeder Vorfeldeinrichtung 5 besteht der optisch/elek-trische Wandler aus einem optischen Empfänger 8, einem nachgeschalteten Verstärker 9 und daran angeschlossenen optischen Sendern 10. An die Sender 10 ist jeweils ein optisches Mittel angeschlossen, das die optische Ausgangsleistung auf mehrere, beispielsweise sieben Lichtwellenleiter $6_1$ bis $6_n$ verteilt. Als optisches Mittel wird ein Sternkoppler 11 eingesetzt, dessen ankommender Anschluß mit dem Ausgang des Senders 10 und dessen abgehende Anschlüsse mit den sieben Lichtwellenleitern 6 verbunden sind.

Der optische Empfänger 8 weist beispielsweise eine Fotodiode und der optische Sender 10 eine Laserdiode auf. An dieser Stelle ist deswegen eine Laserdiode notwendig, weil die erforderliche Linearität und Bandbreite bei genügender Leistung nur von einem solchen Bauteil erbracht werden kann.

Sind mehr als die angegebenen sieben Teilnehmer 7 mit den Fernsehsignalen zu versorgen, dann ist der Verstärker 9

vorzugsweise als Verteilverstärker ausgebildet. Der Verteilverstärker versorgt dann mehrere optische Sender 10, an denen jeweils ein Sternkoppler 11 angeschlossen ist, die jeweils sieben Lichtwellenleiter 6 speisen.

Jeder Teilnehmer weist einen optischen Empfänger 12 auf, der das optische Signal in ein elektrisches Signal umwandelt. Dieses elektrische Signal kann einem herkömmlichen Fernsehempfänger 13 über den normalen Antenneneingang direkt zugeleitet werden. Am optischen Empfänger 12 sind mehrere Ausgänge vorhanden, so daß mehrere Fernsehempfänger 13 parallel mit beispielsweise je einem anderen Programm betrieben werden können.

Vorteilhaft kann es sein die Übertragung im ganzen Verteilnetz oder in Teilen davon im Wellenlängenmultiplex durchzuführen. Um den Signal/Rauschabstand und die nicht linearen Verzerrungen bei analoger Übertragung möglichst günstig zu gestalten, verwendet man hierzu mehrere Laserdioden mit unterschiedlicher Wellenlänge; von denen jede dann nur mit einem Teil der Gesamtzahl der zu übertragenden Fersehsignale moduliert wird.

In Fig. 2 ist ein Ausführungsbeispiel für einen auch anderweitig verwendbaren Sternkoppler 11 gezeigt, der aus baumartig hintereinandergeschalteten Lichtwellenleiterkopplern 15 mit jeweils zwei Ein- und Ausgängen besteht. Ein derartiger Koppler besteht aus zwei Glasfasern, die miteinander auf bestimmte Länge verdrillt und verschmolzen sind.

Der Koppler eignet sich besonders für den Wellenlängenmultiplexbetrieb, weil an seinem Eingang zwei Laserdioden mit unterschiedlicher Wellenlänge $\lambda_1, \lambda_2$ in einfacher Weise angeschlossen werden können.

ZT/P1-Wr/R
02.06.1982

H.M.Gündner-N.Kaiser-W.Stephan-H.Ohnsorge-H.J.Matt 2-2-2-1-1

Patentansprüche

1. Verteilnetz für Fernsehsignale mit einer Kopfstation und mindestens einer Vorfeldeinrichtung, an die Teilnehmer einzeln direkt angeschlossen sind und bei dem die Übertragung über Lichtwellenleiter erfolgt, d a d u r c h  g e - k e n n z e i c h n e t, daß zwischen Kopfstation (1) und Vorfeldeinrichtung (5) und zwischen Vorfeldeinrichtung und Teilnehmer (7) jeweils ein einziger Lichtwellenleiter (4, 6) vorhanden ist und daß die Verteilung der Fernsehsignale auf die Teilnehmer (7) in der Vorfeldeinrichtung mit optischen Mitteln (10, 11) erfolgt.

2. Verteilnetz nach Anspruch 1, dadurch gekennzeichnet, daß die optischen Mittel aus einem Sternkoppler (11) bestehen.

3. Verteilnetz nach Anspruch 2, dadurch gekennzeichnet, daß der Sternkoppler aus baumartig hintereinandergeschalteten Lichtwellenleiterkopplern (15) mit jeweils zwei Ein- und Ausgängen besteht.

4. Verteilnetz nach Anspruch 2 oder 3, dadurch gekennzeichnet, daß der Sternkoppler von mindestens einer Laserdiode (10) gespeist wird.

**0096327**

H.M.Gündner 2-2-2-1-1

5. Verteilnetz nach Anspruch 4, dadurch gekennzeichnet, daß in der Vorfeldeinrichtung (5) ein elektrischer Verteilverstärker (9) vorgesehen ist, an den optische Sender (10) mit nachfolgenden Sternkopplern (11) angeschaltet sind.

6. Verteilnetz nach einem der Ansprüche 1 bis 5, dadurch gekennzeichnet, daß die Übertragung zwischen Kopfstation (1) und Vorfeldeinrichtung (5) und/oder Vorfeldeinrichtung (5) und Teilnehmereinrichtung (7) im Wellenlängenmultiplex erfolgt.

7. Verteilnetz nach Anspruch 6, dadurch gekennzeichnet, daß der Sternkoppler von zwei Laserdioden mit unterschiedlichen Wellenlängen gespeist wird.

ZT/P1-Wr/R
02.06.1982

Fig. 1

Fig. 2

H. M. Gründner 2-2-2-1-1

0096327

1/1

**0096327**

Nummer der Anmeldung

# EUROPÄISCHER RECHERCHENBERICHT

Europäisches Patentamt

EP 83105324.4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | <u>DE - A1 - 2 415 046</u> (SIEMENS)<br><br>* Fig. 1; Seite 3, Zeilen 13-31; Seite 4, 2. Absatz, vorletzte Zeile * | 1,2,4,6 | H 04 N 7/10<br>H 04 B 9/00 |
| P,O,X | ELEKTROTECHNIK UND MASCHINENBAU E UND M, 99. Jahrgang, Heft 7, Juli 1982, Wien | 1 | |
| Y | HORST OHNSORGE "Optische Nachrichtenübertragung als Basis für zukünftige Nachrichtennetze" Seiten 297-307<br><br>* Seite 303, Abb. 21; Seite 305, Abb. 23 * | 2 | |
| Y | GERHARD GRAU "Optische Nachrichtentechnik", 1981<br><br>SPRINGER-VERLAG, Berlin, Heidelberg, New York Seiten 296-302<br><br>* Seite 301, Bild 7.18; Seite 302, Bild 7.19 * | 2,6 | RECHERCHIERTE SACHGEBIETE (Int. Cl. ³)<br><br>H 04 N 7/10<br>H 04 N 7/18<br>H 04 B 9/00 |
| Y | ELEKTRISCHES NACHRICHTENWESEN, Band 56, Nr. 4, 1981, Stuttgart<br><br>J. DUPIEUX, C.K. KAO, H. OHNSORGE, P. RADLEY "Optische Fasertechnik Anwendung auf Breitbandnetze" Seiten 379-384<br><br>* Seite 381, Bild 2b) * | 6 | |

Der vorliegende Recherchenbericht wurde für alle Patentansprüche erstellt.

| Recherchenort | Abschlußdatum der Recherche | Prüfer |
|---|---|---|
| WIEN | 14-09-1983 | BENISCHKA |

| Kategorie | Kennzeichnung des Dokuments mit Angabe, soweit erforderlich, der Maßgeblichen Teile | betrifft Anspruch |
|-----------|---------|---------|
| A | US - A - 4 232 385 (HARA)<br>* Zusammenfassung; Fig. 1-4; Spalte 2, Zeile 61 - Spalte 4, Zeile 20 *<br>-- | 1,6,7 |
| A | US - A - 2 506 672 (KELL)<br>* Fig. 1 *<br>----- | |

**EINSCHLÄGIGE DOKUMENTE**

KLASSIFIKATION DER ANMELDUNG (Int. Cl.³)

RECHERCHIERTE SACHGEBIETE (Int. Cl.³)